# EUROPÄISCHE PATENTSCHRIFT

(11) **EP 0 741 271 B1**
(45) Veröffentlichungstag und Bekanntmachung des Hinweises auf die Patenterteilung: **06.06.2001**
(21) Anmeldenummer: 96104802.2
(22) Anmeldetag: 26.03.1996
(51) Int. Cl.: F25D 23/00, F16B 17/00

(54) **Kältegerät**
Refrigeration apparatus
Appareil frigorifique

(30) Priorität: 03.05.1995 DE 29507374 U
(43) Veröffentlichungstag der Anmeldung: 06.11.1996
(73) Patentinhaber: BSH Bosch und Siemens Hausgeräte GmbH, 81669 München (DE)
(72) Erfinder: Mader, Alfred, 89428 Syrgenstein (DE)

(56) Entgegenhaltungen:
- DE-U- 8 627 258
- DE-U- 9 312 400
- US-A- 2 164 634
- US-A- 2 673 390
- US-A- 4 448 321
- US-A- 4 497 183
- US-A- 4 920 696
- PATENT ABSTRACTS OF JAPAN vol. 9, no. 209 (M-407), 27.August 1985 & JP-A-60 069343 (HITACHI SEISAKUSHO), 20.April 1985,
- FEINWERKTECHNIK, Bd. 65, Nr. 4, 1961, Seiten 135-152, XP002010850 H. EDER: "FEINWERKTECHNISCHE VERBINDUNGEN DURCH PLASTISCHES VERFORMEN "

## Beschreibung

Die Erfindung betrifft ein Kältegerät mit einem Maschinenfach zur Aufnahme eines Kältemittelverdichters, welcher mit Traglaschen ausgestattet ist, welche unter Zwischenlage von Dämpfungskörpern auf einer im Maschinenfach angeordneten Tragschiene ruhen, welche durch die Traglaschen und die Dämpfungskörper hindurchgreifende Zungen aufweist, welche zur Festsetzung des Verdichters an der Tragschiene mit einem an den Dämpfungskörpern vorgesehenen Gegenlager zusammenwirken.

Aus der US-PS 4,920,696 und der US-PS 4,497,183 ist jeweils eine bei einem Kältegerät zum Einsatz kommende Tragschiene zur Halterung und Abstützung eines Kältemittelverdichters bekannt, wobei jede der Tragschienen hochgestellte Befestigungszungen aufweist, welche durch an Traglaschen des Kältemittelverdichters festgesetzte Dämpfungskörper bei auf der Tragschiene abgestelltem Kältemittelverdichter hindurchgreifen. Zur Festsetzung des Kältemittelverdichters auf der Tragschiene sind zusätzliche Befestigungselemente vorgesehen, welche form- und kraftschlüssig mit an den freien Enden der hochgestellten Zungen vorgesehenen Aufnahmen zusammenwirken.

Darüber hinaus ist es bei Kältegeräten der eingangs genannten Art Stand der Technik, die an der Tragschiene angeordneten Zungen, welche durch die am Verdichter angeordneten Traglaschen und die Dämpfungskörper hindurchgreifen, auf ihren über den Dämpfungskörper vorstehenden Endabschnitt eine in ihrer Mitte mit einem Schlitz versehene Scheibe aufzustecken, welche als Gegenlager zur Vermeidung einer zu hohen Flächenpressung am Dämpfungskörper dient. Der über die als Gegenlager dienende Scheibe hinausragende Endabschnitt der Zunge wird zur schwingungsgedämpften Halterung des Verdichters an der Tragschiene verschränkt. Um das zur Verschränkung der Zunge notwendige Drehmoment herabzusetzen, ist man dazu übergegangen, diese mit einem das Torsionswiderstandsmoment deutlich herabsetzenden Ausschnitt auszustatten. Bei dieser Art der Verdichterbefestigung an der Tragschiene kann es jedoch vorkommen, dass bei ungünstigen, beispielsweise während eines Transportvorganges eines Kältegerätes auftretenden Krafteinwirkungen, die zur eigentlichen Befestigung des Verdichters dienende Scheibe sich aus ihrer Befestigungsposition löst und von dem Endabschnitt der Zunge abrutscht, so dass die Befestigung für den Verdichter aufgehoben ist.

Der Erfindung liegt die Aufgabe zugrunde, bei einem Kältegerät gemäß dem Oberbegriff des Anspruches 1 den Kältemittelverdichter so zu befestigen, dass die Befestigungsmaßnahme fertigungstechnisch auf einfache Weise herstellbar ist und der Verdichter durch die Befestigungsmaßnahme auch bei unüblichen Belastungsfällen sicher gehalten ist.

Diese Aufgabe wird gemäß der Erfindung dadurch gelöst, dass die Zungen wenigstens eine quer zu ihrer Ausdehnungsrichtung herausgestellt angeordnete Materialverformung aufweisen, welche mit dem Gegenlager wenigstens formschlüssig zusammenwirkt.

Die erfindungsgemäße Lösung hat den Vorteil, dass die bei Belastungsfällen des Kältegerätes in Erstreckungsrichtung der Zunge auftretende und auf das Gegenlager einwirkende Kraftkomponente unmittelbar durch den Formschluss zwischen der Materialverformung an der Zunge und dem Gegenlager abgefangen wird und nicht wie beim Stand der Technik durch die Verdrillung des Zungenendabschnittes ähnlich wie bei einem Gewinde einer Schraube schiefe Ebenen gebildet sind, welche dazu führen, dass die in Zungenrichtung wirkende Kraftkomponente erneut in Teilkräfte zerlegt wird, welche entgegen dem durch die Verdrillung erzeugten Kraftschluss zur Halterung des Verdichters wirken. Ferner kann durch die erfindungsgemäße Lösung der Fertigungsaufwand für die Tragschiene durch die Einsparung eines an ihr nicht mehr vorzunehmenden Arbeitsschrittes z.B. in Form der Verringerung des Zungenquerschnitts reduziert werden. Darüber hinaus ermöglicht die Erfindung auf einfache Weise die Anpassung des die Halterung bewirkenden Formschlusses an die im wesentlichen durch die Masse des Verdichters hervorgerufene Kraftkomponente.

Nach einer bevorzugten Ausführungsform des Gegenstandes der Erfindung ist vorgesehen, dass die plastische Materialverformung an einer der breiteren Flächenabschnitte der Zungen herausgestellt angeordnet ist.

Durch eine derart angeordnete Materialverformung kann diese entsprechend der auf sie ausgeübten Kraft durch das Gegenlager einerseits hinsichtlich ihrer Anlagelänge für das Gegenlager und andererseits bezüglich ihrer Querschnittsform auf einfache Weise optimiert angepasst gefertigt werden. Genauso ist die Materialverformung hinsichtlich ihrer Lage über die Breite der Zunge wenigstens annähernd auf den Ort der maximalen Krafteinleitung durch das Gegenlager positionierbar.

Ein besonders sicherer und stabiler Formschluss zwischen der Materialverformung und dem Gegenlager ist erreichbar, wenn nach einer nächsten vorteilhaften Ausgestaltung des Gegenstandes der Erfindung vorgesehen ist, dass durch die plastische Materialverformung wenigstens eine im wesentlichen senkrecht zur Erstreckungsrichtung der Zunge angeordnete Anlagestelle für das Gegenlager erzeugt ist.

Gemäß einer nächsten bevorzugten Ausführungsform des Gegenstandes der Erfindung ist vorgesehen, dass die plastische Materialverformung langgestreckt ausgebildet und in Erstreckungsrichtung der Zunge angeordnet ist.

Durch eine derartige Ausbildung der Materialverformung lassen sich für die Zunge auch verhältnismäßig schwache Materialstärken zum Einsatz bringen, durch welche dennoch eine formstabile, zur Einleitung verhältnismäßig hoher Kräfte geeignete plastische Materialverformung unter gleichzeitiger Reduzierung der Verformungskräfte erzeugt werden kann.

Entsprechend einer weiteren bevorzugten Ausführungsform des Gegenstandes der Erfindung ist vorgesehen, dass die in Erstreckungsrichtung der Zunge angeordnete plastische Materialverformung im Querschnitt V-förmig ausgebildet ist.

Eine derartig ausgebildete Materialverformung zeichnet sich einerseits durch ihre besonders hohe, im überwiegenden Teil lediglich aufgrund ihres Querschnitts erreichte Formsteifheit in der Richtung der Kraftübertragung durch das Gegenlager und andererseits dabei gleichzeitig durch ihre aufgrund der Schenkel des V-förmigen Querschnitts erzeugten definierten Auflagebasis für das Gegenlager aus. Außerdem wird durch die V-förmige Gestaltung der Materialverformung eine Kraftaufteilung der durch das Gegenlager übertragenen Kraft erreicht, wodurch sich die Gefahr einer unerwünschten Deformierung der Materialverformung aufgrund der Krafteinleitung durch das Gegenlager deutlich reduziert.

Einerseits eine deutlich verringerte Verformungskraft und andererseits eine hohe Längengenauigkeit ergibt sich für die plastische Materialverformung, wenn nach einer nächsten vorteilhaften Ausgestaltung des Gegenstandes der Erfindung vorgesehen ist, dass die plastische Materialverformung sich vom freien Ende der Zunge bis zu einem Durchbruch in der Zunge erstreckt.

Fertigungstechnisch besonders einfach herzustellen ist ein Durchbruch in der Zunge, wenn nach einer weiteren vorteilhaften Ausgestaltung des Gegenstandes der Erfindung vorgesehen ist, dass der Durchbruch als zylindrische Bohrung ausgebildet ist.

Besonders genau ist das Ende der plastischen Materialverformung festlegbar, wenn nach einer letzten vorteilhaften Ausgestaltung des Gegenstandes der Erfindung vorgesehen ist, dass der Durchbruch in der Zunge als kreissegmentförmige Öffnung ausgebildet ist.

Die Erfindung ist in der nachfolgenden Beschreibung anhand eines in der beigefügten Zeichnung vereinfacht dargestellten Ausführungsbeispieles erläutert. Es zeigen:
- Figur 1: den unteren Abschnitt einer unter Zwischenlage von Dämpfungskörpern auf einer Tragschiene schwingungsgedämpft gelagerten Verdichterkapsel für die Kältemaschine eines Kühl- oder Gefriergerätes,
- Figur 2 bis Fig.4: ausschnittsweise verschiedene Ansichten einer mit einem aus der Tragschiene ausgestanzten, hochgestellten Zunge befestigten elastischen Dämpfungskörper, etwa in natürlichem Maßstab, teilweise im Schnitt.

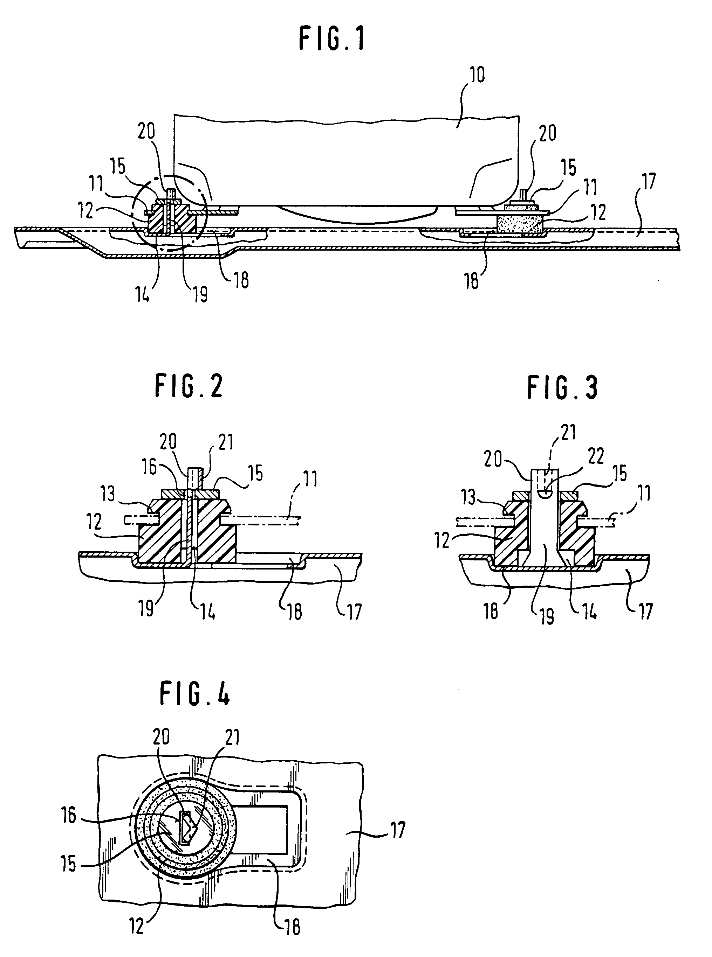

Gemäß Figur 1 ist eine im Maschinenfach eines nicht dargestellten Kältegerätes angeordnete Verdichterkapsel 10 gezeigt, welche einen annähernd zylindrischen Grundriss aufweist und in der üblichen Weise an ihrem Boden mit einander gegenüberliegenden Traglaschen 11 versehen ist. Diese liegen mit ihrer Außenkante außerhalb des Grundrisses der Verdichterkapsel 10 und erstrecken sich annähernd über deren volle Breite. Nahe den äußeren Ecken der Traglaschen 11 sind diese mit Durchbrüchen versehen, in welche das Oberteil von als elastische Muffen ausgebildeten Dämpfungskörpern 12 eingeknöpft ist, die zu diesem Zweck mit einer Ringnut 13 ausgestattet sind. Ferner sind die elastischen Dämpfungskörper 12 mit einem sie axial durchsetzenden Durchbruch 14 ausgestattet, welcher im unteren Abschnitt der Dämpfungskörper 12, zu der von der Verdichterkapsel 10 abgewandten Stirnseite hin einseitig erweitert ausgeführt ist. Die der Verdichterkapsel 10 zugewandte Stirnseite des Dämpfungskörpers 12 dient als Auflagefläche für eine als Gegenlager 15 ausgebildete kreiszylindrische Scheibe, beispielsweise ein Stahlscheibe, welche mit einer zu ihrem Zentrum ausgerichteten, in Draufsicht rechteckigen Öffnung versehen ist. Die der verdichternahen Stirnseite gegenüberliegende untere Stirnseite der Dämpfungskörper 12 stützt sich auf einer in der üblichen Weise im Maschinenfach des Kältegerätes festgesetzten Tragschiene 17 ab, wobei als Abstützfläche für die elastischen Dämpfungskörper 12 der Boden einer in die Tragschiene 17 eingeformten Vertiefung 18 dient, welche den elastischen Dämpfungskörper 12 an der Außenkontur ihres unteren Abschnitts formschlüssig aufnehmen. Im Boden der Vertiefung 18 ist außerdem eine in Form einer Ausstanzung freigeschnittene Zunge 19 angeordnet, welche durch Abwinklung im Bereich ihrer im Querschnitt verstärkt ausgebildeten Wurzel hochgestellt angeordnet ist. Die hochgestellt angeordneten Zungen 19 an der Tragschiene 17 durchdringen sowohl die Dämpfungskörper 12 in ihrem axialen Durchbruch 14 als auch die auf deren Stirnseite angeordneten Gegenlager 15 in ihrer rechteckigen Öffnung 16, wobei deren Endabschnitt 20 über die freie Stirnseite der Gegenlager 15 hinausragt. Der freie Endabschnitt 20 der Zungen 19 ist mit einer von der Zungenspitze bis unmittelbar zur freien Stirnseite des Gegenlagers 15 reichenden langgestreckten plastischen Materialverformung 21 ausgestattet. Diese ist im vorliegenden Ausführungsbeispiel im Querschnitt bzw. in Draufsicht (siehe Figur 4) V-förmig ausgebildet, wobei der Scheitel des V-förmigen Querschnitts der Verdichterkapsel 10 zugewandt ist und in seiner durch spanlose Formgebung erzeugten Endlage die der Verdichterkapsel 10 zugewandte seitliche Begrenzungskante der Öffnung 16 im Gegenlager 15 überlappt. Durch die Überlappung ist das Gegenlager 15 formschlüssig gegen eine von den Dämpfungskörpern 12 weggerichtete axiale Bewegung gehalten, wobei die gegebenenfalls durch eine Beschleunigung der Verdichterkapsel hervorgerufenen Kräfte in Ausdehnungs- oder Axialrichtung der Zunge 19 durch die der Stirnseite des Gegenlagers 15 zugewandte, durch die Schenkel der V-förmigen Materialverformung 21 gebildeten Anschlagfläche, welche im wesentlichen senkrecht zur Ausdehnungsrichtung der Zunge 19 angeordnet ist, aufgefangen sind. Die Länge der V-förmigen Materialverformung 21, welche zu der der Verdichterkapsel 10 hin gerichteten breiteren Fläche der Zunge 19 ausgeformt ist, erstreckt sich bis zur Sehne eines die Zunge 19 kreissegmentförmig durchsetzenden Durchbruchs 22.

Zur Herstellung der plastischen Materialverformung 21 wird vor dem Verformungsvorgang auf das Gegenlager eine, eine gewisse elastische Verformung des Dämpfungskörpers 12 bewirkende Kraft ausgeübt, infolge derer die endgültige Länge des die plastische Materialverformung 21 aufweisenden Endabschnitts 20 gegenüber der Stirnseite des Gegenlagers 15 vorsteht, so daß dieses nach der Herstellung der plastischen Materialverformung 21 unter einer gewissen Vorspannung an deren Anschlagflächen anliegt. Auf diese Weise wird zusätzlich ein Klappergeräusch durch die Gegenlager 15 beispielsweise während des Betriebs der Verdichterkapsel 10, verhindert. Durch den infolge der plastischen Materialverformung 21 zwischen dem Gegenlager 15 und der Zunge 19 hervorgerufenen Formschluss sind die Dämpfungskörper 12 zur Tragschiene 17 fixiert und somit die Verdichterkapsel 10 aufgrund der in ihre Traglaschen 11 eingeknöpften Dämpfungskörper 12 schwingungsgedämpft auf der Tragschiene 17 gelagert.

Neben der im Ausführungsbeispiel dargestellten plastischen Materialverformung 21 sind als Alternativlösungen beispielsweise an beiden Schmalseiten der Zunge 19 vorzunehmende plastische Materialverformungen denkbar. Genauso wäre es möglich, die Materialverformungen 21 in Form eines aus den breiteren Flächen der Zunge 19 herausgerissenen Lappens auszubilden oder nicht wie in der dargestellten Ausführungsform die Materialverformung 21 langgestreckt in Erstreckungsrichtung der Zunge 19 anzuordnen, sondern quer zu ihrer Erstreckungsrichtung, wobei hier ebenfalls unterschiedliche Querschnittsformen möglich wären.

## Patentansprüche

1. Kältegerät mit einem Maschinenfach zur Aufnahme eines Kältemittelverdichters (10), welcher mit Traglaschen (11) ausgestattet ist, welche unter Zwischenlage von Dämpfungskörpern (12) auf einer im Maschinenfach angeordneten Tragschiene (17) ruhen, welche durch die Dämpfungskörper (12) und die Traglaschen (11) hindurchgreifende Zungen (19) aufweist, welche zur Festsetzung des Verdichters (10) an der Tragschiene (17) mit einem an den Dämpfungskörpern (12) vorgesehenen Gegenlager (15) zusammenwirken, **dadurch gekennzeichnet, dass** die Zungen (19) wenigstens eine quer zu ihrer Ausdehnungsrichtung herausgestellt angeordnete plastische Materialverformung (21) aufweisen, welche mit dem Gegenlager (15) wenigstens formschlüssig zusammenwirkt.

2. Kältegerät nach Anspruch 1, **dadurch gekennzeichnet**, dass die plastische Materialverformung (21) an einer der breiteren Flächenabschnitte der Zungen (19) herausgestellt angeordnet ist.

3. Kältegerät nach einem der Ansprüche 1 oder 2, **dadurch gekennzeichnet**, dass durch die plastische Materialverformung (21) wenigstens eine im wesentlichen senkrecht zur Erstreckungsrichtung der Zunge (19) angeordnete Anlagestelle für das Gegenlager (15) erzeugt ist.

4. Kältegerät nach einem der Ansprüche 1 bis 3, **dadurch gekennzeichnet**, dass die plastische Materialverformung (21) langgestreckt ausgebildet und in Erstreckungsrichtung der Zunge (19) angeordnet ist.

5. Kältegerät nach einem der Ansprüche 1 bis 4, **dadurch gekennzeichnet**, dass die in Erstreckungsrichtung der Zunge (19) angeordnete Materialverformung (21) im Querschnitt V-förmig ausgebildet ist.

6. Kältegerät nach einem der Ansprüche 1 bis 5, **dadurch gekennzeichnet**, dass die plastische Materialverformung (21) sich vom freien Ende der Zunge (19) bis zu einem Durchbruch (22) in der Zunge (19) erstreckt.

7. Kältegerät nach Anspruch 6, **dadurch gekennzeichnet**, dass der Durchbruch (22) als zylindrische Bohrung ausgebildet ist.

8. Kältegerät nach Anspruch 6, **dadurch gekennzeichnet**, dass der Durchbruch (22) in der Zunge (19) als kreissegmentförmige Öffnung ausgebildet ist, deren Sehne das Ende der plastischen Materialverformung (21) definiert.

## Claims

1. Cooling appliance with a motor compartment for reception of a refrigerant compressor (10) equipped with support plates (11) which bear, with interposition of damping bodies (12), on a support rail (17) which is arranged in the motor compartment and which has tongues (19), which engage through the damping bodies (12) and the support plates (11) and which for fixing of the compressor (10) at the support rail cooperate with a counterbearing (15) provided at the damping bodies (12), characterised in that the tongues (19) have at least one plastic deformation (21) which is formed to be arranged transversely to its length direction and which co-operates with the counterbearing (15) at least in mechanically positive manner.

2. Cooling appliance according to claim 1, characterised in that the plastic material deformation (21) is arranged to be formed at one of the wider surface portions of the tongues (19).

3. Cooling appliance according to claim 1 or 2, characterised in that at least one abutment location, which extends substantially perpendicularly to the length direction of the tongue (19), for the counterbearing (15) is produced by the plastic material deformation (21).

4. Cooling appliance according to one of claims 1 to 3, characterised in that the plastic material deformation (21) is constructed to be elongate and is arranged in the length direction of the tongue (19).

5. Cooling appliance according to one of claims 1 to 4, characterised in that the material deformation (21) arranged in the length direction of the tongue (19) is constructed to be V-shaped in cross-section.

6. Cooling appliance according to one of claims 1 to 5, characterised in that the plastic material deformation (21) extends from the free end of the tongue (19) up to a passage (22) in the tongue (19).

7. Cooling appliance according to claim 6, characterised in that the passage (22) is formed as a cylindrical bore.

8. Cooling appliance according to claim 6, characterised in that the passage (22) in the tongue (19) is formed as an opening which is shaped in the manner of a segment of a circle and the chord of which defines the end of the plastic material deformation (21).

## Revendications

1. Appareil frigorifique comprenant un compartiment machine destiné à recevoir un compresseur (10) de fluide frigorigène, qui est pourvu de pattes de support (11) reposant sur un rail porteur (17) situé dans le compartiment machine, avec des corps d'amortissement (12) intercalés entre les pattes et le rail porteur, lequel rail porteur est pourvu de languettes (19) qui passent à travers les corps d'amortissement (12) et les pattes de support (11) et coopèrent avec une butée (15) prévue sur les corps d'amortissement (12) afin de fixer le compresseur (10) sur le rail porteur (17), caractérisé en ce que les languettes (19) présentent au moins une déformation plastique de matériau (21) saillant de manière transversale par rapport à leur direction d'extension et coopérant au moins par conjugaison de forme avec la butée (15).

2. Appareil frigorifique selon la revendication 1, caractérisé en ce que la déformation plastique du matériau (21) est saillante sur un des segments de surface larges des languettes (19).

3. Appareil frigorifique selon l'une des revendications 1 ou 2, caractérisé en ce que, grâce à la déformation plastique du matériau (21), on produit au moins un point d'appui pour la butée (15), dans un sens essentiellement perpendiculaire à la direction d'extension de la languette (19).

4. Appareil frigorifique selon l'une des revendications 1 à 3, caractérisé en ce que la déformation plastique du matériau (21) est allongée et située dans la direction d'extension de la languette (19).

5. Appareil frigorifique selon l'une des revendications 1 à 4, caractérisé en ce que la déformation du matériau (21) située dans la direction d'extension de la languette (19) a une section transversale en forme de V.

6. Appareil frigorifique selon l'une des revendications 1 à 5, caractérisé en ce que la déformation plastique du matériau (21) s'étend de l'extrémité libre de la languette (19) jusqu'à une découpure (22) dans la languette (19).

7. Appareil frigorifique selon la revendication 6, caractérisé en ce que la découpure (22) est exécutée en tant qu'alésage cylindrique.

8. Appareil frigorifique selon la revendication 6, caractérisé en ce que la découpure (22) dans la languette (19) est exécutée en tant qu'ouverture en forme de segment de cercle dont la corde définit la fin de la déformation plastique du matériau (21).
